# EUROPEAN PATENT APPLICATION

(11) **EP 4 289 291 A1**
(43) Date of publication of application: **13.12.2023**
(21) Application number: 23176835.9
(22) Date of filing: 01.06.2023
(51) Int. Cl.: A24B 3/14, A24C 5/01

(54) **APPARATUS FOR MAKING AND/OR TREATING A SHEET MADE OF MATERIAL COMPRISING VEGETABLE AND/OR ALKALOID SUBSTANCES, AND A METHOD FOR MAKING AND/OR TREATING SAID SHEET**

(30) Priority: 08.06.2022 IT 202200012104
(71) Applicant: Körber Technologies S.p.A., 31038 Paese (TV) (IT)
(72) Inventor: PAVANETTO, Jader, 30174 Venezia (IT); BOTTACCO, Igor, 32032 Feltre (BL) (IT)
(74) Representative: Gonella, Mario

(57) **Abstract**

The present invention relates to an apparatus for making and/or treating a sheet made of material comprising vegetable and/or alkaloid substances. The apparatus includes a heating unit, a cooling unit, and a collecting unit arranged in this order along an advancement direction of the sheet. Specifically, the cooling unit is configured to receive the sheet in a cooling space and herein to cool it by means of forced gas cooling means which are configured to provide a first forced cooling gas flow and a second forced cooling gas flow at the cooling space, and operatively direct each forced cooling gas flow on at least a portion of a respective face of the sheet.

## Description

### TECHNICAL FIELD OF THE INVENTION

The present invention relates to an apparatus for making and/or treating a sheet made of material comprising vegetable and/or alkaloid substances. In particular, the present invention relates to an apparatus for producing and/or treating a single vegetable substance or a mixture of various vegetable substances in reconstituted form, such as tobacco sheet for smoking articles, a hemp sheet for medical or pharmaceutical use, an aromatic plant sheet for food use, or for producing and/or treating an alkaloid substance or a mixture of various alkaloid substances in reconstituted form, or for producing and/or treating a mixture of vegetable and alkaloids substances in reconstituted form.

The description below will refer to the production and/or treatment of a reconstituted tobacco sheet, purely by way of example. However, the apparatus according to the present invention may also be used, in general, for the production and/or treatment of any vegetable and/or alkaloid substance in reconstituted form.

### BACKGROUND OF THE INVENTION

As known, ground tobacco for cigarettes is obtained by subjecting tobacco leaves to different mechanical processes or treatments, such as threshing, shredding, sieving, etc. However, these different processes produce a large amount of tobacco dust, in addition to normal waste products, such as leaf ribs, or very small pieces.

Over the years, the tobacco industry has developed apparatuses and methods for recycling powdered tobacco and other processing waste, obtaining large sheets of reconstituted tobacco which are adapted to be shredded and mixed with ordinary ground tobacco for cigarettes. Recently, reconstituted tobacco sheets have been used in electronic devices that produce tobacco vapour without the combustion of the latter.

Document WO2021144676, filed by the applicant and published on 22/07/2021, describes an apparatus and method for making and/or treating a sheet of reconstituted material comprising vegetable and/or alkaloid substances, such as for example reconstituted tobacco. With reference to Fig. 1 attached to the present description, document WO2021144676 describes an apparatus 1, including a pulverizing unit or line 2, a gelling unit or machine 3, a mixing unit 4, an extrusion unit 5, a fractionating unit 6, a roller rolling unit 7, a heating or drying unit 8 and a collecting unit 9, such as a winding machine. In particular, WO2021144676 describes an apparatus and method which are adapted to make a sheet made of material reconstituted starting from powdered tobacco, obtained by means of the pulverization unit 2, and a binding composition, obtained by means of the gelling unit 3, which are mixed, extruded and granulated by means of, respectively, the mixing unit 4, the extrusion unit 5 and the fractionating unit 6, so as to form granules of reconstituted material. Subsequently, such granules are first subjected to a rolling step by means of a roller rolling unit 7 so as to make a sheet made of reconstituted material which is subsequently dried by the heating unit 8 and, lastly, wound on itself to form a reel around a winding hub of the collecting unit 9.

Although such known apparatus works appropriately in many cases, it does have drawbacks.

Typically, upon exiting from the heating unit, the sheet made of reconstituted material has a relatively high temperature with respect to the room temperature, and generally comprised between 85 °C and 100 °C. In addition, due to the composition of the sheet made of reconstituted material, which comprises a binding composition, such sheet has a significant degree of adhesiveness which, furthermore, is higher at high temperatures.

In particular, the combination of the degree of adhesiveness and the high temperature (due to the composition of the sheet and its temperature exiting from the heating unit) complicates the subsequent step of winding the sheet by means of the collecting unit. Furthermore, after the sheet made of reconstituted material has been wound on itself forming a reel, the combination of degree of adhesiveness and high temperature increases the likelihood that superimposed layers will adhere to each other. In this condition, a subsequent step of unrolling the reel formed by the sheet which, disadvantageously, tends to break during unrolling, is complicated. Such condition is further aggravated if there is provided for a long period of storage of the reel before unrolling the sheet.

In order to overcome this drawback, the collecting unit can be placed at a relatively large distance from the heating unit, so as to allow a cooling of the sheet in the air before it is wound, therefore reducing the likelihood of superimposed layers adhering to each other. However, in this condition, the apparatus is cumbersome, disadvantageously occupying a large area within a plant. In addition, the likelihood of damaging the sheet or polluting the latter with external agents, such as for example particles present in the working environment within the plant, is increased in this condition.

Document WO2020127584 describes an apparatus and method for making and/or treating a sheet made of material reconstituted starting from powdered tobacco and a binding composition. In particular, WO2020127584 describes a cooling unit which is arranged between a heating unit and a collecting unit, so as to reduce the temperature of the sheet made of reconstituted material and facilitate the winding step.

However, WO2020127584 does not describe a specific construction of the cooling unit and the configuration provided for does not allow for its efficient and versatile use to obtain a desired cooling degree of the sheet made of reconstituted material.

In particular, in recent years, especially in the tobacco industry, there has been a demand, at the same time, for the high quality of reconstituted tobacco sheets, for the high efficiency and compactness of the apparatuses, and for greater versatility of use of the latter. In addition, simplicity of construction and maintenance of said apparatuses is required.

As a result, there arises the need to provide a solution that at least overcomes at least one of the drawbacks described above.

### SUMMARY OF THE INVENTION

The task of the present invention is to provide an apparatus configured for effectively making and/or treating a sheet made of material comprising vegetable and/or alkaloid substances, ensuring high quality of the sheet.

In the context of the task outlined above, an object of the present invention relates to an apparatus configured to provide effective temperature reduction of the sheet exiting from a heating unit, before a sheet is collected by means of a collecting unit, for example by winding.

A further object relates to an apparatus configured to provide versatility of use depending on characteristics of the sheet and/or processing parameters.

A further object relates to an apparatus configured to provide high productivity.

A further object relates to an apparatus configured to ensure the wholeness of the sheet during processing.

A further object relates to an apparatus which envisages construction compactness.

A further object relates to an apparatus which envisages operating reliability.

A further object relates to an apparatus which envisages reduction of energy consumption.

A further object relates to an apparatus which envisages an easy construction.

A further object relates to an apparatus which envisages an easy maintenance.

A further object relates to a method for effectively making and/or treating a sheet made of material comprising vegetable and/or alkaloid substances, ensuring high quality of the sheet.

The aforementioned tasks and others which will be more apparent hereinafter in the description, are achieved through an apparatus and a method as defined in the independent claims. Preferred embodiments are defined in the dependent claims.

### BRIEF DESCRIPTION OF THE FIGURES

The further characteristics and advantages of the apparatus and of the method according to the present invention, will become more apparent in the following description relating to embodiments provided purely by way of non-limiting example, with reference to the following figures, wherein:
- Fig. 1 shows a diagram of an apparatus for making and/or treating a sheet made of material comprising vegetable and/or alkaloid substances, according to the prior art;
- Fig. 2 shows a perspective view of an apparatus for making and/or treating a sheet made of material comprising vegetable and/or alkaloid substances, according to a first embodiment of the present invention;
- Fig. 3 shows a lateral view of the apparatus of Fig. 2;
- Fig. 4 shows a perspective view of a portion of the sheet made of material comprising vegetable and/or alkaloid substances of Fig. 2;
- Fig. 5 shows a lateral view of the apparatus of Fig. 3 which is enlarged at a heating unit;
- Fig. 6 shows a lateral view of the apparatus of Fig. 3 which is enlarged at a collecting unit;
- Fig. 7 shows a lateral view of the apparatus of Fig. 3 which is enlarged at a cooling unit;
- Fig. 8 shows a lateral view of only the cooling unit of Fig. 7 and a portion of the sheet passing through it;
- Fig. 9 shows a perspective view of the cooling unit of Fig. 8;
- Fig. 10 shows a front view of the forced gas cooling means of the cooling unit of Fig. 8;
- Fig. 11 shows a lateral view of the forced gas cooling means of Fig. 10;
- Fig. 12 shows a cross-sectional lateral view of the forced gas cooling means of Fig. 11 and a portion of the sheet passing through it;
- Fig. 13 shows a diagram of the forced gas cooling means of Fig. 10;
- Fig. 14 shows a diagram of forced gas cooling means of a cooling unit of an apparatus according to a second embodiment of the present invention;
- Fig. 15 shows a front view of forced gas cooling means of a cooling unit of an apparatus according to a third embodiment of the present invention;
- Fig. 16 shows a perspective view of a cooling unit of an apparatus according to a fourth embodiment of the present invention;
- Fig. 17 shows a perspective view of a cooling unit of an apparatus according to a fifth embodiment of the present invention.

### DETAILED DESCRIPTION OF THE INVENTION

The present invention relates to an apparatus for making and/or treating a sheet made of material comprising vegetable and/or alkaloid substances. Preferably, said apparatus is adapted to produce and/or treat a single vegetable substance or a mixture of various vegetable substances in reconstituted form, such as tobacco sheet for smoking articles, a hemp sheet for medical or pharmaceutical use, an aromatic plant sheet for food use, or to produce and/or treat an alkaloid substance or a mixture of various alkaloid substances in reconstituted form, or to produce and/or treat a mixture of vegetable and alkaloids substances in reconstituted form.

In the description below reference will be made to the production and/or treatment of a reconstituted tobacco sheet. However, such reference is to be understood as provided by way of non-limiting example, given that the apparatus according to the present invention may be used for the production and/or treatment of any vegetable and/or alkaloid substance in reconstituted form.

Furthermore, in the description below, the expression "sheet" includes both a whole sheet and a cut sheet, for example longitudinally, defining a plurality of strips side by side transversely to each other.

Furthermore, in the description below, reference will be made to some embodiments of an apparatus including a heating or drying unit, a cooling unit, and a collecting unit, for example a winding unit. However, such reference is to be understood as exclusively provided by way of non-limiting example, given that the apparatus according to the present invention may provide for further units adapted to produce and/or treat a sheet comprising vegetable and/or alkaloid substances. Document WO2021144676, published on 22/07/2021 and incorporated herein for reference, describes an example apparatus including, besides a heating unit and a collecting unit, as a winding unit or machine, also further units such as a pulverizing unit, a gelling unit, a mixing unit, an extrusion unit, a fractionating unit, and a roller rolling unit. It will become clear to a person skilled in the art that such further units may be included, all or some, in the apparatus according to the present invention. Furthermore, it will become clear to a person skilled in the art that such further units may provide for further constructions other than those described in document WO2021144676.

Furthermore, in the description below, expressions such as "above", "below", "upper", "lower" or the like refer to an apparatus according to the present invention, in the standard operative configuration, as shown in the attached figures.

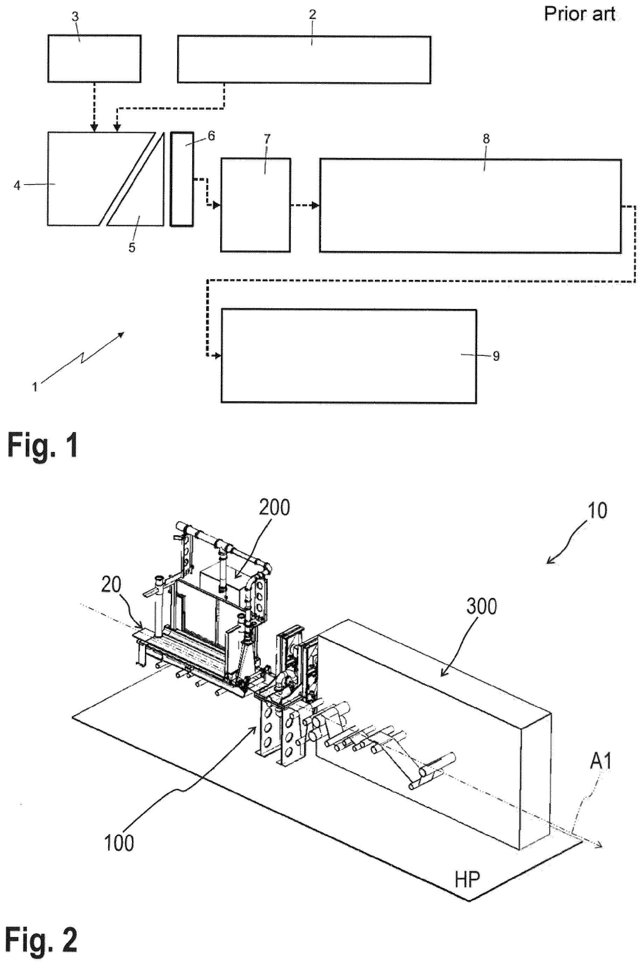

Figs. 2, 3 and 5 to 13 show an apparatus 10 for making and/or treating a sheet 20 made of material comprising vegetable and/or alkaloid substances, according to a first preferred embodiment of the present invention.

Preferably, the material comprising one or more vegetable and/or alkaloid substances is a slurry material including tobacco powder, water and a binding agent. However, this selection shall not be deemed as limiting, as mentioned previously.

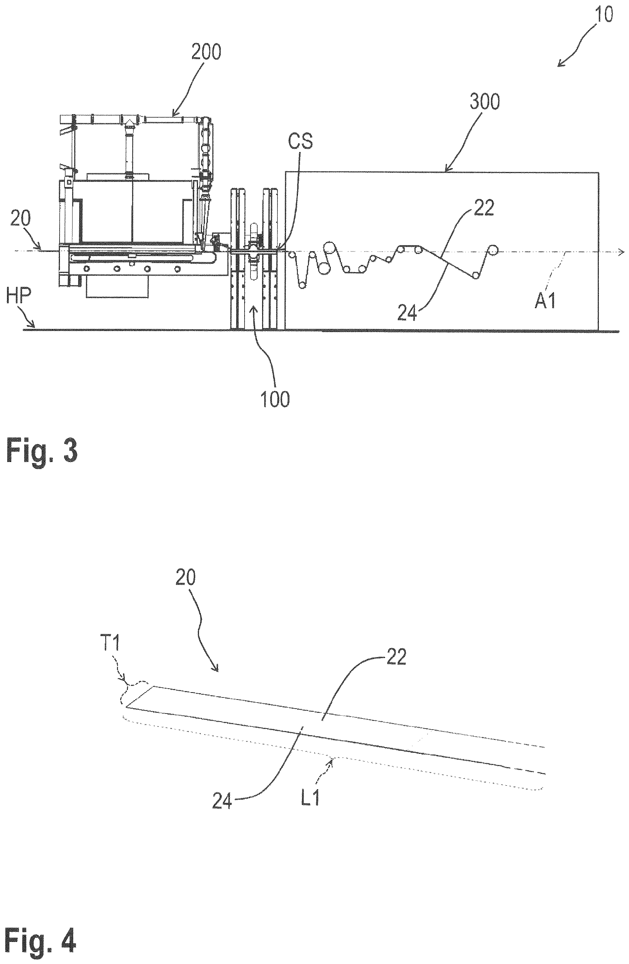

With reference to Fig. 4, the sheet 20, adapted to be processed using the apparatus 10 of the present invention, is provided with a first face 22 and a second face 24 which are opposite to each other and separated by a thickness of said sheet 20. The sheet 20, typically with a predetermined thickness, provides for a longitudinal extension L1 (length) greater than a transversal extension T1 (width).

Particularly with reference to Figs. 2, 3 and 5 to 7, apparatus 10 preferably includes a heating unit 200 (or drying unit 200), a cooling unit 100, and a collecting unit 300 (or winding unit 300) which lie on a lying plane HP of a plant. The heating unit 200, the cooling unit 100 and the collecting unit 300 are arranged sequentially to each other in this order along an advancement direction A1. In particular, the apparatus 10 is configured to longitudinally advance the sheet 20 along the advancement direction A1 (the advancement direction A1 is indicated by a two-point dash arrow in the figures). Furthermore, the apparatus 10 is preferably provided with an electronic command and control system (not shown in the figures) which is configured to coordinate the actuation of the various units, typically in a coordinated manner or individually.

However, this embodiment shall not be deemed as limiting and, as mentioned above, the apparatus 10 may include further units in addition to the heating unit 200, the cooling unit 100, and the collecting unit 300 shown in the attached figures. In particular, still with reference to document WO2021144676, the apparatus 10 may include one or more further units selected from the group comprising pulverizing unit, gelling unit, mixing unit, extrusion unit, fractionating unit, and roller rolling unit which are arranged upstream of the drying unit 200 so as to provide - to the latter - the sheet 20 preferably having a predetermined thickness. For example, in a further preferred embodiment, the apparatus 10 comprises a pulverizing unit combined with a gelling unit, a mixing unit, an extrusion unit, a fractionating unit, a roller rolling unit, the heating unit 200, the cooling unit 100, and the collecting unit 300 which are arranged sequentially to each other in this order along the advancement direction A1.

The heating unit 200 is configured to heat the material of the sheet 20. In particular, in the present embodiment wherein the material comprises tobacco powder, water and binding agent, the drying unit 200, as heating unit 200, is adapted to increase the temperature of sheet 20 by inducing evaporation of part of the water contained (drying) so as to bring the water content per unit weight to a value preferably lower than 20 %, and more preferably comprised between 8 % and 16 % on a wet basis.

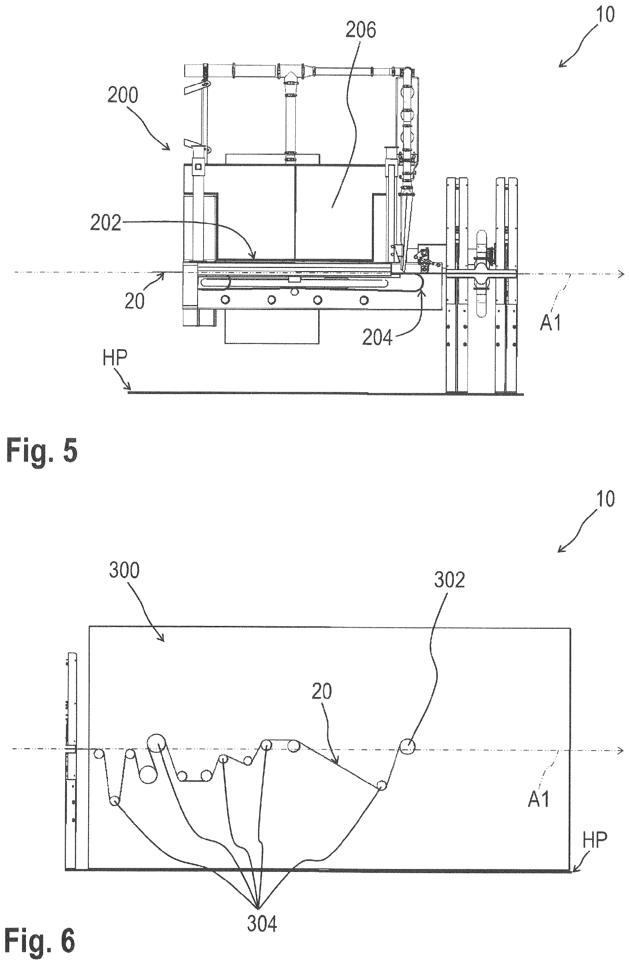

The heating unit 200 may provide for different constructions. Particularly with reference to Fig. 5, in the present embodiment, the heating unit 200 comprises a heating tunnel 202 within which there is arranged a conveyor device 204, such as a conveyor belt, preferably electrically operated, which is configured to advance the sheet 20 along the advancement direction A1, preferably at a predetermined speed. Furthermore, the heating unit 200 comprises heating means 206 which are configured to heat the sheet 20 and the space inside the heating tunnel 202. The heating means 206, shown schematically in the figures using parallelepiped-shaped elements, may have different configurations and may in turn include one or more heating devices selected from the group comprising hot air ovens, infrared ovens, or the like, and combinations thereof. Such heating devices may be arranged, for example, one after the other along the advancement direction A1.

The collecting unit 300, or the winding unit 300, is preferably configured to temporarily collect and store the sheet 20 after the latter has been subjected to heating and cooling steps, as better explained below. In particular, in the present embodiment, the collecting unit 300 comprises an assembly of mechanisms or devices adapted to arrange the sheet 20 in a configuration which preferably provides for a superposition of a plurality of layers, such as a reel configuration in the case of winding, or other configurations such as for example zig-zag-like.

Particularly with reference to Fig. 6, in the present more preferred embodiment, the winding unit 300, as the collecting unit 300, includes one or more motor-driven winding means, preferably electrically operated, each of which is provided with a respective substantially cylindrical-shaped winding hub 302. The winding hub 302 is adapted to rotate around a respective rotation axis, preferably orthogonal to the advancement direction A1 and parallel to the lying plane HP, in order to wind (that is wind like a reel) the sheet 20, or individual strips adjacent to each other obtained from the longitudinally cut sheet, as explained below.

As a matter of fact, the collecting unit 300, or the winding unit 300, may possibly include cutting means, which are adapted to continuously longitudinally cut the sheet 20 as it advances along the advancement direction A1. In this manner, the winding unit 300 is adapted to split, that is cut, the sheet 20 into two or more strips with predetermined widths and arranged transversely adjacent to each other, and therefore each strip can be wound separately from the others around a respective winding hub 302. Alternatively, the collecting unit 300 may be configured so that the two or more strips are wound around the same winding hub 302 forming respective reels arranged adjacent to each other. Possibly, the collecting unit 300, or the winding unit 300, may include trimming means which are adapted to trim the two longitudinal edges of the sheet 20, for example before winding, in order to obtain a sheet with pre-determined and substantially constant width T1.

Preferably, the collecting unit 300 further comprises one or more guide rollers 304 which can be rotated around respective axes substantially parallel to each other and to those of said one or more winding hubs 302. In particular, said one or more guide rollers 304 are arranged substantially one next to the other in order to guide the sheet 20, or the various strips, toward a respective winding hub 302. Said one or more guide rollers 304 may include drive rollers which are motor-driven and adapted to pull/push the sheet 20, or the strip sheet 20, toward the respective winding hub 302, e idlers which are adapted to rotate freely around their rotation axis in order to guide - along a predetermined path - the sheet 20, or strip sheet 20, toward the respective winding hub 302. Possibly, one or more of said guide rollers 304 may provide for cutting elements, such as blades arranged superficially, which are adapted to longitudinally cut the sheet 20 as it advances in order to obtain a splitting thereof into strips and/or to trim the two longitudinal edges thereof.

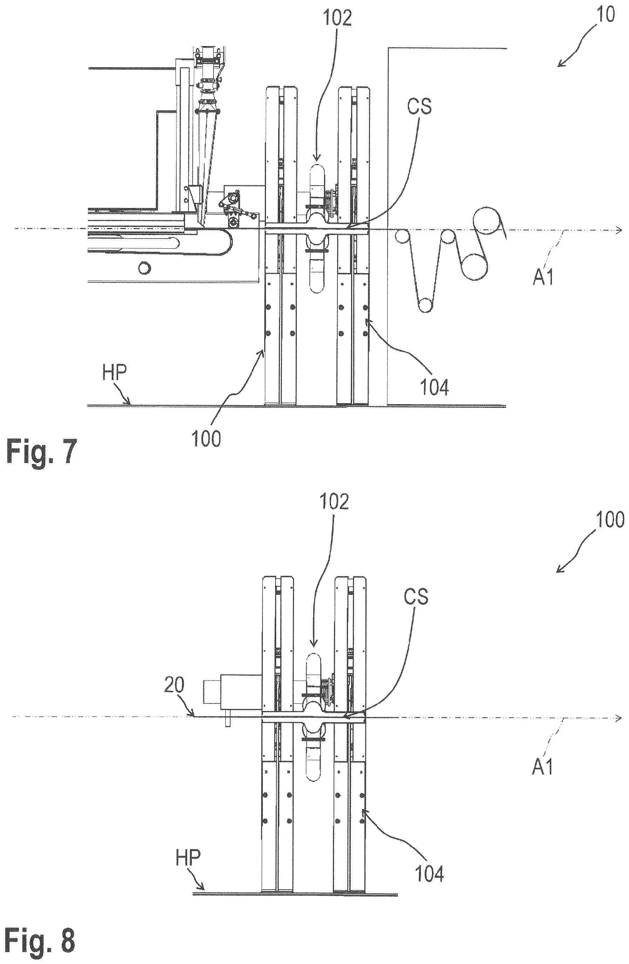

With particular reference to Figs. 7 to 13, the cooling unit 100 is configured to receive - in a cooling space CS - the sheet 20 and here cool it by means of forced gas cooling means 102 which are supported by frame means 104 preferably resting on the lying plane HP. In other words, the cooling unit 100 provides for a cooling space CS configured to receive the sheet 20, substantially slidably as the latter advances along the advancement direction A1, and it is also configured to cool said sheet 20 within said cooling space CS by means of forced gas cooling means 102.

As used in the present description, the expression "forced gas cooling means" is used to indicate a system, for example comprising a fan or compressor, which is adapted to force the movement of a gas having a temperature that is lower than that of the sheet 20 exiting from the heating unit 200, such as air at room temperature or air cooled with a suitable cooling or air conditioning device, such as a chiller.

In particular, according to the present invention, the forced gas cooling means 102 are configured to provide a first forced cooling gas flow F1 and a second forced cooling gas flow F2 which are substantially distinguished from each other at said cooling space CS (in the figures, the directions of forced cooling gas flows F1 and F2 are schematised using respective dashed arrows.)

As used in the present description, the expression "forced cooling gas flow" is used to indicate a forced gas flow having a temperature which is lower than that of the sheet 20 exiting from the heating unit 200, such as for example air at room temperature or cooled air with a suitable cooling or air conditioning device such as a chiller.

The forced gas cooling means 102 are further configured to operatively direct each of said first forced cooling gas flow F1 and second forced cooling gas flow F2 on at least a portion of a respective of said two first 22 and second 24 faces of the sheet 20. In other words, the forced gas cooling means 102 are configured to operatively direct the first forced cooling gas flow F1 on at least a portion of the first face 22 of the sheet 20, and to direct the second forced cooling gas flow F2 on at least a portion of the second face 24 of the sheet 20.

In possible embodiments, the forced gas cooling means 102 are configured to operatively direct each of said first forced cooling gas flow F1 and second forced cooling gas flow F2 directly on at least a portion of a respective portion of said two first 22 and second 24 faces of the sheet 20.

Advantageously, in this condition the apparatus 10 is configured to effectively make and/or treat the sheet 20 made of material comprising vegetable and/or alkaloid substances, ensuring high quality of the sheet 20.

As a matter of fact, advantageously, the cooling unit 100 of the apparatus 10 is configured to ensure an effective reduction in the temperature of sheet 20 exiting from the heating unit 200, before it is collected through the collecting unit 300. Therefore, by cooling the sheet 20 exiting from the heating unit 200, its subsequent collection, that is its winding, through the collecting unit 300, is facilitated. Furthermore, cooling the sheet 20 exiting from the heating unit 200 allows to reduce or eliminate the likelihood that the superimposed layers of the sheet 20 collected adhere to each other, thus ensuring its wholeness, in particular during a step for unrolling from the reel configuration.

Specifically, since there are provided two forced cooling gas flows (first F1 and second F2), each of which is directed on a respective of the two faces (first 22 and second 24), an amount of contact surface (that is heat exchange surface) is increased between the total forced cooling gas flow and the sheet 20 to be cooled. As a result, the likelihood of reducing the temperature of the sheet 20 within cooling space CS is increased with respect to the prior art.

Furthermore, advantageously, by increasing the cooling capability of the sheet 20 within the cooling space CS, the apparatus 10 provides for a compact construction given that the cooling unit 100 occupies a small area along the advancement direction A1.

Furthermore, advantageously, the size of the cooling space CS and the speed/flow rate of the two forced cooling gas flows, first F1 and second F2, can be widely chosen. In this condition, the cooling unit 100 of the apparatus 10 is versatile given that one can broadly select the operating conditions depending on the characteristics of the sheet 20, such as thickness and composition of the material, and/or depending on the processing parameters, such as an advancement speed of the sheet 20 along the advancement direction A1.

In particular, advantageously, by increasing the cooling capability of the sheet 20 within the cooling space CS, the apparatus 10 ensures high productivity allowing to set high advancement speeds of the sheet 20 along the advancement direction A1.

Furthermore, advantageously, providing forced cooling gas flows, first F1 and second F2, directed on both two faces, first 22 and second 24, allows to reduce or eliminate the likelihood of polluting the sheet 20 with external agents, such as for example particles present in the plant where the apparatus 10 is installed.

Preferably, the forced gas cooling means 102 are configured to direct, within the cooling space CS, the first forced cooling gas flow F1 and the second forced cooling gas flow F2 along at least partially opposite directions at said two faces, first 22 and second 24, of said sheet 20. In other words, at the two faces, first 22 and second 24, at least one of the components of the vector defined by the first forced cooling gas flow F1 is opposite (that is flows in the opposite direction) to one of the components of the vector defined by the second forced cooling gas flow F2.

In further embodiments, the forced gas cooling means 102 are configured to direct, at said two faces, first 22 and second 24, the first forced cooling gas flow F1 and the second forced cooling gas flow F2 along directions opposite to each other and optionally orthogonal to the advancement direction A1, that is orthogonal to the faces, first 22 and second 24, of the sheet 20.

Advantageously, in this condition, the cooling unit 100 of the apparatus 10 is configured to further effectively ensure a reduction in the temperature of sheet 20 exiting from the heating unit 200, before it is collected by means of the collecting unit 300.

Specifically, since there are provided two forced cooling gas flows (first F1 and second F2), along at least partially opposite directions at the two faces (first 22 and second 24), there is obtained a more effective heat exchange between the total forced cooling gas flow and the sheet 20 to be cooled.

Furthermore, by providing forced cooling gas flows, first F1 and second F2, with equal velocities and/or flow rates within a given range, it is possible to apply - on the two faces, first 22 and second 24 - pressures that are substantially counter-balanced and that do not operatively alter the shape of sheet 20 or interfere with a smooth advancement along the advancement direction A1. Therefore, in this condition, the wholeness of the sheet is further ensured during processing, and the apparatus provides for further reliable operation.

In the present preferred embodiment, the forced gas cooling means 102 comprise a first conduit line portion 106 adapted to provide said first forced cooling gas flow F1, and a second conduit line portion 108 adapted to provide said second forced cooling gas flow F2.

In particular, the two conduit line portions, first 106 and second 108, are - upstream - fluidly connected to cooling- forced-gas-generating-means 110, such as for example a system comprising a fan.

Advantageously, in this condition, by suitably selecting the configuration or structure of the conduit line portions, first 106 and second 108, and the characteristics of the cooling-forced-gas-generating-means 110, the cooling unit 100 of apparatus 10 is adapted to ensure further easy and reliable forced cooling gas flows, first F1 and second F2, having desired speeds and/or flow rates.

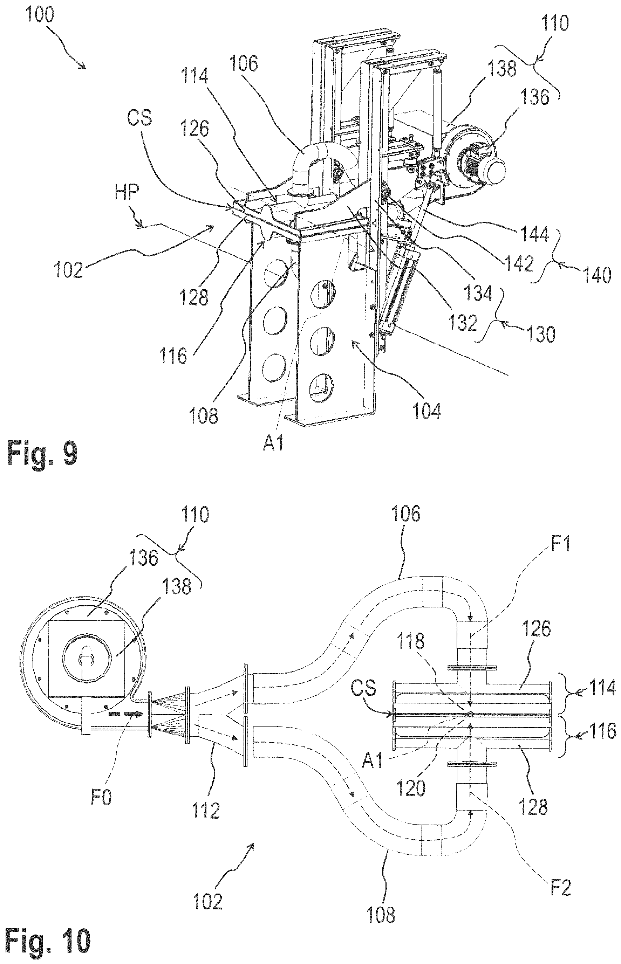

Preferably, the two conduit line portions, first 106 and second 108, are - upstream - fluidly connected to the same cooling-forced-gas-generating-means 110, such as for example a single system comprising a single fan, through a bifurcation conduit 112. In particular, the bifurcation conduit 112 is fluidly connected - upstream - to the cooling-forced-gas-generating-means 110 and - downstream - to each conduit line portion, first 106 and second 108, through two separate supply openings in order to split a common forced cooling gas total flow F0, provided by the cooling-forced-gas-generating-means 110, into the two forced cooling gas flows, first F1 and second F2 (in Fig. 10 the direction of the forced cooling gas total flow F0 is schematised by means of a bold-dashed arrow).

Furthermore, the first conduit line portion 106 and the second conduit line portion 108 are each provided - downstream - with a respective first outlet section 114 and second outlet section 116 respectively defining, or comprising at least a first injection opening 118 and at least a second injection opening 120 open towards the cooling space CS so as to therein provide at least a portion of the respective forced cooling gas flow F1, F2,

In particular, each of said at least one injection opening, first 118 and second 120, of the present embodiment is arranged operatively facing toward at least a portion of a respective portion of said two faces, first 22 and second 24, of the sheet 20 as the latter advances in the cooling space CS along the advancement direction A1. In other words, said at least one first injection opening 118 is arranged operatively facing toward facing at least one portion of the first face 22, and said at least one second injection opening 120 is arranged operatively facing toward at least one portion of the second face 24.

Possibly, at least one, preferably both, of said injection openings, first 118 and second 120, provides for an oblong shape, such as a slit, which extends transversely to the advancement direction A1. Preferably, at least one, preferably both, of said injection openings, first 118 and second 120, provides for an oblong extension shape, in the direction transversal to the advancement direction A1, which is equal to or greater than the width T1 of the sheet 20.

Advantageously, in this condition, the cooling unit 100 of the apparatus 10 provides for a construction adapted to ensure cooling evenness of the sheet 20 along a direction transversal to the advancement direction A1.

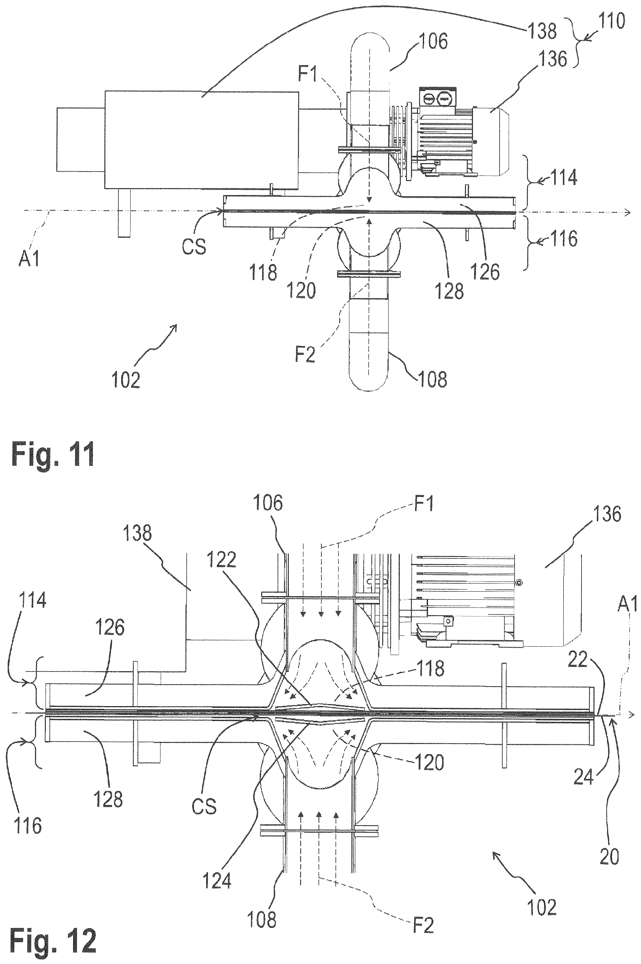

Particularly with reference to Fig. 12, in the present preferred embodiment, the forced gas cooling means 102 further comprise first deflector elements 122 arranged at the first injection opening 118, and second deflector elements 124 arranged at the second injection opening 120.

In particular, the deflector elements, first 122 and second 124, are configured and arranged so as to divert at least a portion of the respective forced cooling gas flow, first F1 and second F2, along a direction having at least one component parallel to the advancement direction A1.

Preferably, the first deflector elements 122 and the second deflector elements 124, such as one or more plate elements, are configured and arranged so as to deflect a first portion of the respective forced cooling gas flow, first F1 and second F2, along a direction having at least one component opposite to the advancement direction A1, and a second portion of the respective forced cooling gas flow, first F1 and second F2, along a direction having at least one component matching with the advancement direction A1.

Advantageously, in this condition, suitably selecting the shape and/or arrangement of the deflector elements, first 122 and second 124, allows to reliably and effectively select the trajectory and speed with which the forced cooling gas flows, first F1 and second F2, act on the faces, first 22 and second 24, of the sheet 20 within the cooling space CS to obtain a desired heat exchange.

Preferably, the first outlet section 114 and the second outlet section 116 respectively comprise a first wall element 126 and a second wall element 128. The first wall element 126 and the second wall element 128 are configured and arranged to at least partially define the cooling space CS.

In particular, this first outlet section 114 of the first conduit line portion 106 is preferably formed on said first wall element 126, and said second outlet section 116 of the second conduit line portion 108 is preferably formed on said second wall element 128. In other words, the first injection opening 118 is substantially formed on the first wall element 126, and the second injection opening 120 is substantially formed on the second wall element 128.

In the present embodiment, the first wall element 126 and the second wall element 128 are arranged facing and at a given distance from each other, for example one above the other, so as to form a passage opening substantially defining said cooling space CS. Preferably, the first wall element 126 and the second wall element 128 are defined by two respective substantially planar plate elements, which are arranged parallel to each other and to the advancement direction A1. In this condition, the wall elements, first 126 and second 128, are substantially parallel to the faces, first 22 and second 24, of sheet 20 when the latter advances along the advancement direction A1 within the cooling space CS.

Advantageously, in this condition the volume of the cooling space CS can be reliably defined so as to obtain an effective cooling of the sheet 20. For example, there can be defined a passage opening in which the distance between the wall elements, first 126 and second 128, is comprised between 5 mm and 20 mm, more preferably comprised between 8 mm and 12 mm.

In particular, in this condition, the forced cooling gas total flow in a cooling space CS, substantially defined by the passage opening between the outlet sections, first 114 and second 116, which has desired size and conformation so as to reliably define the speed and trajectory with which the forced cooling gas flows, first F1 and second F2, act on the faces, first 22 and second 24, of the sheet 20 so as to obtain a desired heat exchange.

Particularly with reference to Fig. 9, the cooling unit 10 preferably comprises adjustment means 130 which are configured to adjust a distance between the wall elements, first 126 and second 128, so as to adjust the volume of said cooling space CS. In other words, the adjustment means 130 are configured to vary the distance between the outlet sections, first 114 and second 116, adjusting a relative distance thereof.

Preferably, the adjustment means 130 are configured to vary the distance between the outlet sections, first 114 and second 116, adjusting the distance between the wall elements, first 126 and second 128, within a range comprised between 5 mm and 20 mm, more preferably comprised between 8 mm and 12 mm.

In this case, at least one of the first conduit line portion 106 and the second conduit line portion 108 is at least partially defined by a flexible sleeve, so as to allow the relative displacement of the outlet sections, first 114 and second 116, and of the corresponding wall elements, first 126 and second 128.

The adjustment means 130 may provide for various constructions. In the present embodiment, the adjustment means 130 comprise one or more bracket elements 132 and one or more guide elements 134, such as for example rail elements. The bracket elements 132 extend from at least one of the wall elements, first 126 and second 128, of the outlet sections, first 114 and second 116. The bracket elements 132 are adapted to slide along the guide elements 134, the latter being connected to the frame means 104. In particular, the bracket elements 132 are further adapted to maintain a desired position along the guide elements 134 by means of locking devices, such as a fastening screws system (not numbered in Fig. 9), so as to reversibly adjust and lock the distance between the wall elements, first 126 and second 128, that is the distance between the outlet sections, first 114 and second 116. However, this selection shall not be deemed as limiting and the adjustment means 130 may provide for further constructions.

Advantageously, this condition allows to extensively and easily adjust the volume of the cooling space CS so as to obtain an effective cooling of the sheet 20 depending on the characteristics of the latter, such as thickness and composition of the material, and/or processing parameters, such as an advancement speed of the sheet 20 along the advancement direction A1, making the apparatus 10 particularly versatile.

In the present embodiment, the cooling-forced-gas-generating-means 110 comprise a forced gas generation device 136 and a gas cooling device 138, or a gas conditioning device 138.

In particular, the forced gas generating device 136, such as a fan, is adapted to receive or suction a gas, such as air, and force the movement thereof providing a gas flow. While, the gas cooling device 138, such as a chiller, is adapted to lower the temperature of a gas, such as air, which it receives or suctions.

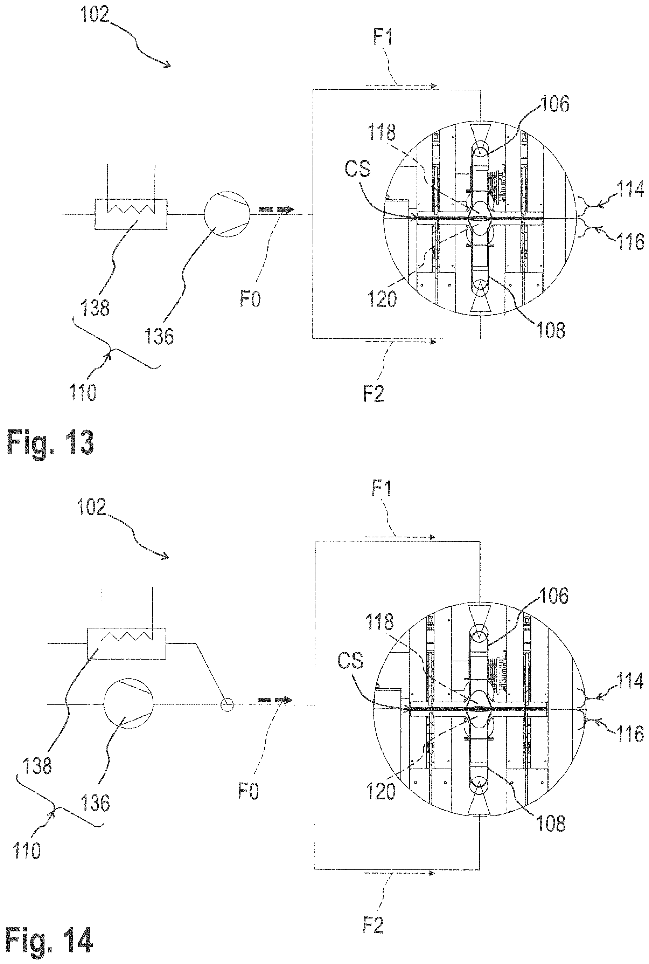

Particularly with reference to Fig. 13, in the present first embodiment, the forced-gas-generation-means 110 provide for the gas cooling device 138 and the forced gas generation device 136 which are arranged in series with respect to each other so as to first suction an amount of air at room temperature from the external, subsequently cool the entire amount of air at a predetermined temperature and - lastly - force said amount of cooled air so as to provide the forced cooling gas total flow F0. However, this configuration shall not be deemed as limiting, and there may be provided for further configurations, as explained below.

Advantageously, the arrangement of the gas cooling device 138 and the forced gas generation device 136 in series allows to use a single forced gas generation device to control the gas flow rate, avoiding the use of a further one serving the cooling device. Therefore, this condition allows to simplify the construction of the cooling-forced-gas-generating-means 110.

In particular still with reference to Fig. 9, the cooling unit 10 preferably comprises displacement means 140 which are configured to move the wall elements, first 126 and second 128, one with respect to the other between a closing position, in which they are coupled defining said cooling space CS, and an opening position, in which they are de-coupled and spaced apart, for example not superimposed with respect to each other. In other words, the displacement means 140 are configured to move the outlet sections, first 114 and second 116, one with respect to the other between a closing position, in which they are coupled defining said cooling space CS, and an opening position, in which they are de-coupled and spaced apart, for example not superimposed with respect to each other.

The displacement means 140 may provide for various constructions. In the present embodiment, the displacement means 140 comprise one or more hinge elements 142 and optionally respective actuator means 144.

The first wall element 126 is connected, for example through the bracket elements 132, to the hinge means 142 so as to rotate around the latter to move between said closing and opening positions. In particular, the actuator means 144, such as plunger devices, are connected to the bracket elements 132 and to the frame means 104 so as to drive the rotation of the first wall element 126 around the hinge means 142 between said closing and opening positions. However, this construction shall not be deemed as limiting and the displacement means 140 may provide for further constructions.

Advantageously, in this condition the apparatus 10 provides for a simple maintenance given that the wall elements, first 126 and second 128, can be arranged in an opening position adapted to allow an easy inspection of the outlet sections, first 114 and second 116, and of the respective injection openings, first 118 and second 120, as well as of the sheet 20 at the cooling unit 100.

Now, described below are further embodiments of the present invention which provide for modifications relating to some components of the apparatus 10. Therefore, the components which are substantially unchanged will not be described again specifically and the same reference numerals will be used.

In a second embodiment, the apparatus 10 is substantially identical to that of the first embodiment, except for the configuration of forced gas cooling means 102 of the cooling unit 100.

In particular, with reference to Fig. 14, in the second embodiment, the forced-gas-generation-means 110 provide for a gas cooling device 138 and a forced gas generation device 136 which are arranged in parallel to each other. In this manner, the forced gas generating device 136 is adapted to suction a first amount of air from the external at room temperature, while the gas cooling device 138 is adapted to suction and cool a second amount of air from the external at room temperature. Subsequently, the two amounts of air, first and second, are conveyed through a collector conduit, and mixed together so as to provide the forced cooling gas total flow F0 which, as mentioned in the first embodiment, is then split into the two forced cooling gas flows, first F1 and second F2.

Advantageously, the in parallel arrangement of the gas cooling device 138 and of the forced gas generation device 136 provides an alternative configuration in which cold gas is used at a lower temperature and flow rate than the target ones to obtain the cooling of the sheet 20.

In a third embodiment, the apparatus 10 is substantially identical to any one of the embodiments described above, except for an additional component of the forced gas cooling means 102 of the cooling unit 100.

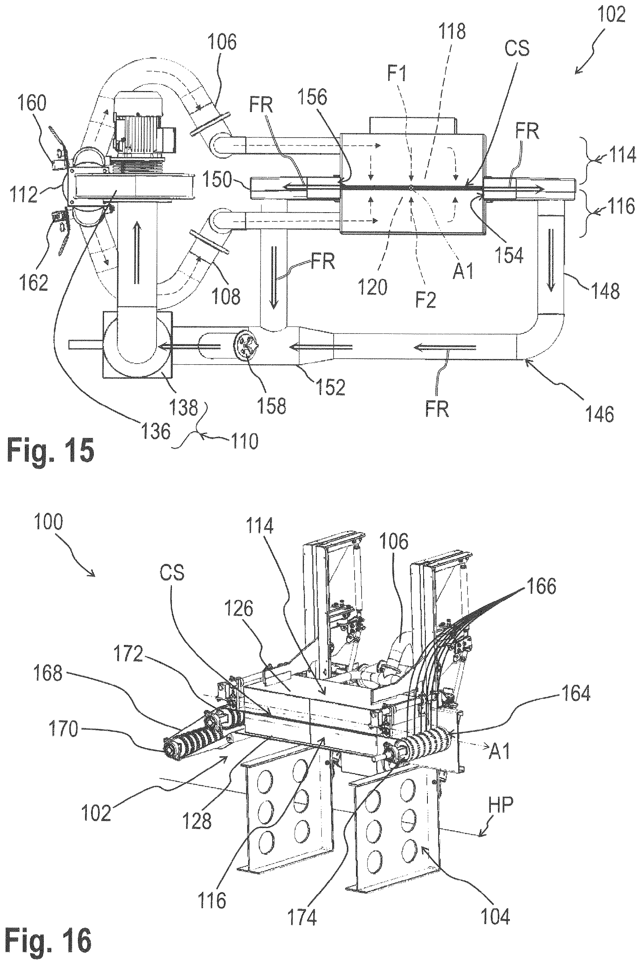

In this third embodiment, shown in Fig. 15, the outlet sections, first 114 and second 116, preferably provide for hollow box-like structures which are fluidly connected to the respective conduit lines, first 106 and second 108, and having respective open bases defining injection openings, first 118 and second 120, at the cooling space CS so as to therein provide the respective forced cooling gas flow, first F1 and second F2. However, there may be provided for outlet sections, first 114 and second 116, which are substantially similar to those of the first embodiment.

Still with reference to Fig. 15, in the third embodiment, the forced gas cooling means 102 comprise a gas recovery line 146 which is adapted to place the cooling space CS and the cooling-forced-gas-generating-means 110 in fluid communication.

In particular, the gas recovery line 146 is configured to receive or collect gas from the cooling space CS, or gas exiting from the latter, obtaining an amount of recovered gas flow FR. Furthermore, the gas recovery line 146 is configured to provide said amount of recovered gas flow FR upstream of the cooling-forced-gas-generating-means 110 (in Fig. 15 the directions of the amount of recovered gas flow FR are schematised using respective double arrows).

The gas recovery line 146 may provide for different constructions. In the present embodiment, the gas recovery line 146 comprises a first portion of recovery line 148 and a second portion of recovery line 150 which are both connected - upstream - to the cooling space CS and - downstream - to a common manifold portion 152 in turn connected upstream of the cooling-forced-gas-generating-means 110. In particular, the portions of the recovery line, first 148 and second 150, are each configured and arranged so as to receive - upstream - at least part of the gas present in the cooling space CS, or gas exiting from the latter.

The portions of the recovery line, first 148 and second 150, may provide for different structures and arrangements with respect to the cooling space CS. In the present preferred embodiment, the portions of the recovery line, first 148 and second 150, are arranged outside the cooling space CS, preferably in proximity to the latter, in substantially opposite positions with respect to the advancement direction A1 so that respective receiving ports, first 154 and second 156, are arranged facing toward the cooling space CS, between the outlet sections, first 114 and second 116.

Furthermore, the receiving ports, first 154 and second 156, preferably provide for an oblong shape arranged parallel to the advancement direction A1, so as to receive a greater amount of gas exiting from the cooling space CS.

In particular, coming from the cooling space CS, the amount of recovered gas flow FR provides for a partially cooled temperature, due to the thermal increase of the forced cooling gas flows, first F1 and second F2, due to the heat exchange of the latter with the sheet 20, and it can be reused by the cooling-forced-gas-generating-means 110. In this condition, advantageously, the cooling-forced-gas-generating-means 110, and in particular the gas cooling device 138, must do less work to lower the gas temperature to a predetermined value. As a result, the cooling unit 100 of the apparatus 10 provides for reduced energy consumption to obtain the reduction of the temperature of the sheet 20.

Preferably, the gas recovery means 146 further comprise a suction port 158 adapted to place the external of said cooling unit 100 in fluid communication with the cooling-forced-gas-generating-means 110 through the gas recovery line 146. The suction port 158 may provide for different configurations, and in the present embodiment it is preferably arranged substantially at the manifold portion 152. However, there may be provided for further embodiments in which the suction port 158 can be arranged at one or both portions of the recovery line, first 148 and second 150. Possibly, the suction port 158 can be choked so as to adjust an amount of air that is adapted to flow through it.

In this manner, there can be selected an amount of air to be added to the amount of recovered gas flow FR to obtain a forced cooling gas total flow for cooling the sheet 20 through the cooling unit 100.

Furthermore, in the third embodiment, the forced gas cooling means 102 preferably comprise valve means, first 160 and second 162, which are respectively arranged at the first conduit line portion 106 and the second conduit line portion 108 so as to adjust the respective forced cooling gas flows, first F1 and second F2. It is clear that such valve means, first 160 and second 162, may also be provided in the embodiments described above.

In a fourth embodiment, the apparatus 10 is substantially identical to any one of the embodiments described above, except for an additional component of the cooling unit 100.

Similarly to the previous one, in this fourth embodiment shown in Fig. 16, the outlet sections, first 114 and second 116, preferably provide for hollow box-like structures which are fluidly connected to the respective conduit lines, first 106 and second 108, and having respective open bases at the cooling space CS so as to therein provide the respective forced cooling gas flow, first F1 and second F2. However, there may be provided for outlet sections, first 114 and second 116, which are substantially similar to those of the first embodiment.

Still with reference to Fig. 16, in the fourth embodiment, the cooling unit 100 comprises conveyor means 164 which are configured to receive and convey the sheet 20 within the cooling space CS along the advancement direction A1, preferably at a predetermined speed.

In particular, the conveyor means 164 comprise one or more opening portions 166 configured to allow the entry of at least one of said forced gas flows, first F1 and second F2, into the cooling space CS through at least one portion of the conveyor means 164.

The conveyor means 164 may provide for various constructions. In the present embodiment, the conveyor means 164 comprise an endless belt 168, as a conveyor component, which is guided by two or more rollers (respectively three rollers 170, 172 and 174 in the present embodiment) of which at least one is a driver roller driven by an electric motor (not shown in the figure). Specifically, the endless belt 168 comprises a plurality of through openings 166, such as opening portions 166, which are adapted to allow the entry of the second forced gas flow F2 into the cooling space CS through the endless belt 168, that is through at least a portion of the conveyor means 164 (for the sake of simplicity Fig. 16 only shows some of the plurality of through openings 166 of the endless belt 168).

Alternatively, the conveyor means 164 comprise a modular chain or meshes system, as a conveyor component, to replace the endless belt 168. Specifically, the gaps between the elements forming the modular chain or meshes define said plurality of through openings 166, such as opening portions 166.

Preferably, the opening portions 166 define an area having an extension comprised between 20 % and 80 % with respect to the total surface of the conveyor component of the conveyor means 164, such as for example an endless belt, a chain system or meshes system.

In this condition, advantageously, the conveyor means 164 reliably ensure, at the same time, a heat exchange with both faces, first 22 and second 24, and a desired advancement speed of the sheet 20 within the cooling space CS so as to obtain a reliable and even degree of cooling through the cooling unit 100.

Furthermore, advantageously, the conveyor means 164 reliably ensure the receipt and advancement of the sheet 20 coming from the previous unit.

It is clear that with respect to what has been described so far, further embodiments of the apparatus 10 are possible without departing from the claimed scope of protection.

As a matter of fact, with reference to Fig. 5 of the first embodiment, in the description above, the forced gas cooling means 102 of the cooling unit 100 comprise deflector elements, first 122 and second 124, arranged at the injection openings, first 118 and second 120. However, further configurations of the outlet sections, first 114 and second 116, may be provided for.

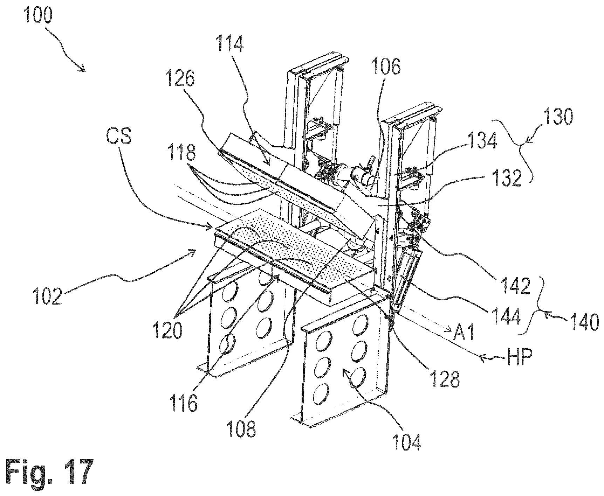

For example, with reference to Fig. 17, in a fifth embodiment, the cooling unit 100 is substantially identical to any one of the embodiments described above, except for a different structure of the outlet sections, first 114 and second 116.

In Fig. 17 the cooling unit 100 is shown - for the sake of simplicity - in the opening position in which the outlet sections, first 114 and second 116, are de-coupled and spaced apart through displacement means 140, as described in the first embodiment.

In the fifth embodiment, the outlet sections, first 114 and second 116, provide for hollow box-like structures which are fluidly connected to the respective conduit lines, first 106 and second 108, and having respective open bases at the cooling space CS. Each of said open bases of the outlet sections, first 114 and second 116, is respectively engaged by a first wall element 126 and by a second wall element 128 operatively defining the cooling space CS when the cooling unit 100 is in the closing position in which the outlet sections, first 114 and second 116, are coupled together through displacement means 140.

In particular, the first wall element 126 is provided with a plurality of first injection openings 118, and the second wall element 128 is provided with a plurality of second injection openings 120 so as to provide - within the cooling space CS - at least a portion of the respective forced cooling gas flow, first F1 and second F2.

In this condition, the wall elements, first 126 and second 128, essentially act as diffuser elements, and the respective plurality of injection openings, first 118 and second 120, are open towards the cooling space CS so as to direct, according to a pattern and/or desired directions, various portions of each of the cooling gas flows, first F1 and second F2, on respective areas of the faces, first 22 and second 24, of the sheet 24.

Each of such wall elements, first 126 and second 128, may be a septum made of porous media or a perforated septum (with holes, for example, of micro-metric or larger sizes) which is arranged at the respective outlet section, first 114 and second 116, and whose pores or holes define said plurality of injection openings, first 118 and second 120. In particular, conformation and/or size and/or arrangement of the plurality of injection openings, first 118 and second 120, are selected to direct - according to a pattern and/or desired directions - various portions of each of the cooling gas flows, first F1 and second F2, on the respective face, first 22 and second 24, of the sheet 24.

In this condition, advantageously, suitably selecting the conformation and/or size and/or arrangement of each of the plurality of injection openings, first 118 and second 120, of the wall elements, first 126 and second 128, allows to provide an even degree of cooling of the sheet 20 within the cooling space CS.

Furthermore, advantageously, suitably selecting the conformation and/or size and/or arrangement of each of the plurality of injection openings, first 118 and second 120, of the wall elements, first 126 and second 128, allows to reliably and effectively select the trajectory and speed with which the forced cooling gas flows, first F1 and second F2, act on the faces, first 22 and second 24 of the sheet 20 within the cooling space CS to obtain a desired heat exchange.

It is clear that a person skilled in the art can provide for further embodiments of the apparatus 10 which combine one or more of the described embodiments. For example, there may be provided for an apparatus 10 in which the cooling unit 100, of the first or of fifth embodiment, comprises the gas recovery line 146, as defined in the third embodiment, and/or the conveyor means 164, as defined in the fourth embodiment.

Described below is a method for making and/or treating the sheet 20 made of material containing vegetable and/or alkaloid substances, preferably by means of the apparatus 10, having characteristics of any of the embodiments described above.

The method includes, in the following order, the steps of heating the sheet 20 using the heating unit 200, cooling the sheet 20 using the cooling unit 100, and collecting the sheet 20 using the collecting unit 300.

In particular, according to the present invention, the method provides for that in the cooling step there be further comprised the steps of providing, at the cooling space CS, a first forced cooling gas flow F1 and a second forced cooling gas flow F2, which are substantially distinct from each other, and contact each forced cooling gas flow, first F1 and second F2, with at least a portion of a respective of said two faces, first 22 and second 24, of the sheet 20.

In this condition, the advantages described above are obtained. In particular, the method allows to effectively make and/or treat the sheet 20 made of material comprising vegetable and/or alkaloid substances, ensuring high quality of the sheet 20.

As a matter of fact, as mentioned above, the use of forced cooling gas flows, first F1 and second F2, on both faces, first 22 and second 24, ensures an effective reduction in the temperature of sheet 20, before carrying out the collection step.

Preferably, the first forced cooling gas flow F1 and the second forced cooling gas flow F2 are directed along at least partially opposite directions at said two faces, first 22 and second 24, of said sheet 20.

In further embodiments, the first forced cooling gas flow F1 and the second forced cooling gas flow F2 are directed along opposite directions and optionally orthogonal to the faces, first 22 and second 24, of the sheet 20.

Preferably, the heating step is carried out to dry the material from which the sheet 20 is made so that the water content per unit weight is reduced to a value preferably lower than 20 %, and more preferably comprised between 8 % and 16 % on a wet basis.

Furthermore, preferably, the collection step is carried out so as to wind (that is wind like a reel) the sheet 20, for example around the winding hub 302 of the collecting unit 300 described in the previous embodiments. In particular, the cooling of sheet 20 obtained using two forced cooling gas flows, first F1 and second F2, is particularly suitable for a step for reel-winding the sheet 20, given that in this case there is a greater likelihood of pressing and adhering superimposed layers to each other, when the sheet 20 is not cooled appropriately.

Furthermore, with reference to the third embodiments described above, preferably the method further comprises the step of obtaining an amount of recovered gas flow FR from the cooling space CS, cooling at least a part of said amount of recovered gas flow FR and subsequently provide the latter to at least one of said first forced cooling gas flow F1 and second forced cooling gas flow F2.

In this condition, as mentioned above, an amount of gas which provides for a partially cooled temperature and which may be provided to the forced cooling gas flows, first F1 and second F2, reducing - as a result - energy consumption to obtain the cooling of the sheet 20, can be recovered from the cooling space CS.

It is clear that with respect to what has been described so far, further embodiments of the apparatus 10 are possible without departing from the claimed scope of protection.

As a matter of fact, with respect those described above, the apparatus 10 may provide for a cooling unit 100 in which the cooling- forced-gas-generating-means 110 comprise a first fan associated with a first chiller which are adapted to provide the first forced cooling gas flow F1 through the first conduit line portion 106, and a second fan associated with a second chiller, independent of the former, which are adapted to provide the second forced cooling gas flow F2 through the first conduit line portion 106.

Furthermore, with respect those described above, the apparatus 10 may provide for a collecting unit 300 comprising an assembly of mechanisms or devices adapted to arrange the sheet 20 in a zig-zag configuration instead of a reel-like configuration. However, the degree of cooling obtained with the cooling unit 100 of the present invention is particularly adapted for a step for reel-winding the sheet 20, given that in this case there is a greater likelihood of pressing and adhering superimposed layers to each other, if the sheet 20 is not cooled appropriately.

Alternatively, with respect those described above, the apparatus 10 may provide for a collecting unit 300 comprising a conveyor system, such as for example a conveyor belt or a roller conveyor system, which is adapted to receive, that is collect the sheet 20, or the portions thereof, and drive it towards further making and/or treating units and steps. In this alternative embodiment, advantageously, the cooling unit 100 of the apparatus 10 is configured to ensure an effective cooling exiting from the heating unit 200 reducing or eliminating the likelihood that the sheet 20 or portions thereof adhere to components of the conveyor system, such as a conveyor belt.

Possibly, with respect those described above, the apparatus 10 may provide for a collecting unit 300 comprising a folding system which is adapted to receive, that is collect, the sheet 20 or portions thereof and fold it or roll it, for example longitudinally, to supply it to further making and/or treating units and steps. Therefore, the collecting unit 300 may substantially act as a collection and/or mechanical treatment unit 300. In this possible embodiment, advantageously, the cooling unit 100 of the apparatus 10 is configured to ensure an effective cooling exiting from the heating unit 200 reducing or eliminating the likelihood that the sheet 20 or portions thereof, disadvantageously adhere to components of the conveyor system, adapted to carry out said mechanical treatment, so as to obtain an effective and reliable mechanical treatment.

Furthermore, there may be provided for further embodiments in which between heating unit 200 and the cooling unit 100, and/or between the cooling unit 100 and collecting unit 300, and/or - downstream of the collecting unit 300 - there are provided for further units or devices adapted to carry out further steps for making and/or treating the sheet 20 or portions thereof.

For example, there may be provided for a further embodiment in which - along the advancement direction A1 between the cooling unit 100 and the collecting unit 300 - there is arranged a fractionating unit, or a chopping unit, comprising appropriate cutting means. The fractionating unit is configured to cut sheet 20 into small portions, for example measuring 1 mm width-wise and 20 mm length-wise which can be obtained by cutting along the transversal and longitudinal directions of the sheet 20. In particular, in this possible embodiment, the collecting unit 300, comprising a container element such as for example a crate or box, is arranged downstream of said fractionating unit so as to temporarily collect and store the sheet 20, that is the reduced portions thereof obtained by fractionating. Alternatively, in this possible embodiment, the collecting unit 300 may comprising - replacing the container element - a hopper element or a chute element which adapted to receive, that is collect, the reduced portions of the sheet 20 and drive them towards the further making and/or treating units and steps. In this embodiment, advantageously, the cooling unit 100 of the apparatus 10 is configured to ensure an effective cooling exiting from the heating unit 200 reducing or eliminating the likelihood that the small portions of the sheet 20 adhere to each other and/or with walls/elements of the collecting unit 300. In particular, in this condition, the small portions of the sheet 20 may be reliably used for subsequent processing steps, such as for example preparing a mixture together with other ingredients, such as natural tobacco, for the production of smoking articles.

In the light of the above, it is clear that significant results have been achieved, overcoming the drawbacks of the prior art, allowing to obtain an apparatus 10 configured to effectively make and/or treat a sheet 20 made of material comprising vegetable and/or alkaloid substances, ensuring high quality of the sheet 20.

Furthermore, the apparatus 10 is configured to ensure effective reduction of the temperature of the sheet 20 exiting from the heating unit 200, before entering into collecting unit 300, for example to obtain a winding thereof.

Furthermore, the apparatus 10 is configured to ensure versatility of use depending on characteristics of the sheet 20 and/or processing parameters.

Furthermore, the apparatus 10 is adapted to ensure the wholeness of the sheet 20 during the processing.

Furthermore, in particular in the third embodiment, which provides for the gas recovery line 146, the apparatus 10 provides for reduced energy consumption to obtain the cooling of the sheet 20.

Lastly, the apparatus 10 provides for construction compactness, operating reliability, simple construction and simple maintenance steps.

Naturally, the materials and equipment used to implement the present invention, as well as the shape and size of the individual components, may be the most appropriate depending on the specific requirements.

## Claims

1. Apparatus (10) for making and/or treating a sheet (20) made of material comprising vegetable and/or alkaloid substances wherein said sheet (20) is provided with a first face (22) and with a second face (24) opposite each other,
said apparatus (10) including a heating unit (200), a cooling unit (100), and a collecting unit (300) arranged in this order along an advancement direction (A1) of said sheet (20),
said heating unit (200) being configured to heat said sheet (20), said cooling unit (100) being configured to receive said sheet (20) in a cooling space (CS) and herein to cool said sheet (20) by means of forced gas cooling means (102), and said collecting unit (300) being configured to collect said sheet (20) or portions thereof,
**characterised in that**
said forced gas cooling means (102) are configured to provide a first forced cooling gas flow (F1) and a second forced cooling gas flow (F2) at said cooling space (CS), and
said forced gas cooling means (102) being further configured to operatively direct said first forced cooling gas flow (F1) on at least a portion of said first face (22) of said sheet (20) and said second forced cooling gas flow (F2) on at least a portion of said second face (24) of said sheet (20).

2. The apparatus (10) according to claim 1, wherein said forced gas cooling means (102) are further configured to direct said first forced cooling gas flow (F1) and said second forced cooling gas flow (F2) along directions at least partially opposite each other at said faces (22, 24) of said sheet (20).

3. The apparatus (10) according to claim 1 or 2, wherein said forced gas cooling means (102) comprise a first conduit line portion (106) adapted to provide said first forced cooling gas flow (F1), and a second conduit line portion (108) adapted to provide said second forced cooling gas flow (F2),
said conduit line portions (106, 108) being upstream fluidly connected to cooling-forced-gas-generating-means (110) and each downstream providing for a respective first outlet section (114) and second outlet section (116) respectively comprising at least a first injection opening (118) and at least a second injection opening (120) open towards said cooling space (CS) so as to therein provide at least a portion of the respective forced cooling gas flow (F1, F2),
each of said at least an injection opening (118, 120) operatively facing towards at least a portion of a respective one of said faces (22, 24) of said sheet (20).

4. The apparatus (10) according to claim 3, wherein said first outlet section (114) comprises a first wall element (126) and said second outlet section (116) comprises a second wall element (128), said wall elements (126, 128) at least partially defining said cooling space (CS), and said wall elements (126, 128) respectively comprising said at least a first injection opening (118) and at least a second injection opening (120).

5. The apparatus (10) according to any of claims 3 or 4, wherein said cooling unit (100) further comprises adjustment means (130) configured to adjust a distance between said outlet sections (114, 116) so as to adjust a volume of said cooling space (CS).

6. The apparatus (10) according to any of the preceding claims, wherein said forced gas cooling means (102) further comprise a forced gas generation device (136) and optionally a gas cooling device (138).

7. The apparatus (10) according to any of the preceding claims, wherein said forced gas cooling means (102) further comprise a gas recovery line (146) configured to receive or collect gas from said cooling space (CS), or gas leaving said cooling space (CS), so as to obtain an amount of recovered gas flow (FR), and further configured to provide said amount of recovered gas flow (FR) upstream of cooling-forced-gas-generating-means (110).

8. The apparatus (10) according to any of the preceding claims, wherein said cooling unit (100) further comprises conveyor means (164) configured to receive and transport said sheet (20) inside said cooling space (CS) along said advancement direction (A1),
said conveyor means (164) comprising one or more opening portions (166) configured to allow the entry of at least one of said forced gas flows (F1, F2) into said cooling space (CS) through said conveyor means (164).

9. Method for making and/or treating a sheet (20) made of material comprising vegetable and/or alkaloid substances wherein said sheet (20) is provided with a first face (22) and with a second face (24) opposite each other,
said method including in the following order the steps of heating said sheet (20), cooling said sheet (20) in a cooling space (CS), and collecting said sheet (20) or portions thereof,
**characterised in that**
said cooling step comprises the steps of:
- providing a first forced cooling gas flow (F1) and a second forced cooling gas flow (F2) at said cooling space (CS), and
- contacting said first forced cooling gas flow (F1) with at least a portion of said first face (22) of said sheet (20) and said second forced cooling gas flow (F2) with at least a portion of said second face (24) of said sheet (20).

10. The method according to the preceding claim, further comprising the step of obtaining an amount of recovered gas flow (FR) from said cooling space (CS), cooling at least a part of said amount of recovered gas flow (FR) and subsequently providing the latter to at least one of said forced cooling gas flows (F1, F2).
